# EUROPEAN PATENT APPLICATION

(11) **EP 4 648 380 A1**
(43) Date of publication of application: **12.11.2025**
(21) Application number: 23919335.2
(22) Date of filing: 22.09.2023
(51) Int. Cl.: H04L 47/193, H04L 47/24, H04L 47/32

(54) **DATA TRANSMISSION METHOD AND APPARATUS, DEVICE, AND STORAGE MEDIUM**

(30) Priority: 02.02.2023 CN 202310120340
(71) Applicant: Huawei Technologies Co., Ltd., Shenzhen, Guangdong 518129 (CN)
(72) Inventor: XU, Anmin, Shenzhen, Guangdong 518129 (CN); WU, Bang, Shenzhen, Guangdong 518129 (CN); TAN, Guobin, Shenzhen, Guangdong 518129 (CN); ZHANG, Wei, Shenzhen, Guangdong 518129 (CN); HUANG, Hong, Shenzhen, Guangdong 518129 (CN); WANG, Rentai, Shenzhen, Guangdong 518129 (CN); QU, Tianyu, Shenzhen, Guangdong 518129 (CN)
(74) Representative: Pfenning, Meinig & Partner mbB
(86) International application number: PCT/CN2023/120695
(87) International publication number: WO 2024/159771

(57) **Abstract**

A data transmission method and apparatus, a device, and a storage medium are provided. The method includes: receiving a first packet sent by a second device, where the first packet includes a plurality of second packets, each second packet in the plurality of second packets carries service data, a time sequence attribute of the second packet, and a sequence number of the second packet, and the time sequence attribute indicates whether the service data needs to be added to a waiting queue; and when the time sequence attribute of the second packet is a blocking attribute, adding the service data carried in the second packet to the waiting queue; or when the time sequence attribute of the second packet is a non-blocking attribute, uploading the service data to an application layer of a first device. According to embodiments of this application, data transmission efficiency can be improved.

## Description

This application claims priority to Chinese Patent Application No. 202310120340.7, filed with the China National Intellectual Property Administration on February 2, 2023 and entitled "DATA TRANSMISSION METHOD AND APPARATUS, DEVICE, AND STORAGE MEDIUM", which is incorporated herein by reference in its entirety.

### TECHNICAL FIELD

This application relates to the field of communication technologies, and in particular, to a data transmission method and apparatus, a device, and a storage medium.

### BACKGROUND

The internet of things is an information carrier based on the internet, a conventional telecommunications network, and the like, and enables all devices that can be independently addressed to form an interconnected network. With development of the internet of things technologies, remote communication is needed between devices in more application scenarios. The internet can implement remote communication between devices in the internet of things.

However, the transmission control protocol (Transmission Control Protocol, TCP) in the internet needs to strictly comply with a time sequence requirement. Once a packet loss occurs, data sent by a second device following data on which the packet loss occurs will not be received by a first device, resulting in data transmission congestion and a data transmission delay. Although the user datagram protocol (User Datagram Protocol, UDP) in the internet can avoid the data transmission congestion, memory overheads needed by the UDP protocol are high, and memory of many devices in the internet of things cannot meet the requirement. Therefore, the UDP protocol is not applicable to remote communication between devices in the internet of things.

### SUMMARY

Embodiments of this application provide a data transmission method and apparatus, a device, and a storage medium, to improve data transmission efficiency.

According to a first aspect, an embodiment of this application provides a data transmission method, applied to a first device, where the first device communicates with a second device over Ethernet, and the method includes:
receiving a first packet sent by the second device, where the first packet includes a plurality of second packets, each second packet in the plurality of second packets carries service data, a time sequence attribute of the second packet, and a sequence number of the second packet, and the time sequence attribute indicates whether the service data needs to be added to a waiting queue; and
when the time sequence attribute of the second packet is a blocking attribute, adding the service data carried in the second packet to the waiting queue; or
when the time sequence attribute of the second packet is a non-blocking attribute, uploading the service data to an application layer of the first device.

The second packet is the adaptive reliable transmission protocol (Adaptive Reliable Transmission protocol, ARTP).

According to this embodiment of this application, whether to add a packet to the waiting queue is determined based on different time sequence attributes of the packet. When the time sequence attribute of the packet is a non-blocking attribute, service data may be directly uploaded to the application layer of the first device, without waiting for service data corresponding to a sequence number less than a sequence number of the service data. In this way, a data receiving delay is reduced. In addition, time sequence preserving can be performed on data based on different time sequence attributes of the packet. For example, when the time sequence attribute of the packet is a blocking attribute, the data needs to be added to the waiting queue. When all service data with a blocking attribute arrives at the first device, the service data with a blocking attribute is uploaded to a service layer. When the time sequence attribute is a non-blocking attribute, old service data is invalid. Even if the old data is lost, the old data does not need to be retransmitted, and new data is directly uploaded to the application layer. This ensures a time sequence of the packet, and reduces the data receiving delay. In addition, one first packet may carry a plurality of ARTP packets, so that data transmission efficiency is improved.

In a possible implementation, the first packet carries a response attribute of each second packet, and the response attribute indicates a speed of responding to the second packet.

The method further includes:
sending a response packet to the second device based on the response attribute of the second packet.

In this way, the second packet may be responded to based on response speed requirements of different packets, so that a quantity of packet sending times can be reduced, and occupation of communication resources can be reduced.

In a possible implementation, the sending a response packet of the second packet to the second device based on the response attribute of the second packet includes:
when the response attribute of the second packet is a quick response attribute, sending the response packet of the second packet to the second device within a first preset time length; or
when the response attribute of the second packet is a slow response attribute, sending the response packet of the second packet to the second device within a second preset time length, where
the first preset time length is less than the second preset time length.

In this way, the second packet may be responded to based on response speed requirements of different packets, so that a quantity of packet sending times can be reduced, and occupation of communication resources can be reduced.

In a possible implementation, the method further includes:
when the first device generates to-be-sent target service data within the second preset time length, generating a response packet including the to-be-sent target service data, where a destination address of the target service data is an address pointing to the second device.

In this way, service data that needs to be sent by the first device to the second device can be carried in a response packet and sent to the second device, so that the quantity of packet sending times can be reduced, and the occupation of the communication resources can be reduced.

In a possible implementation, the response packet includes a sequence number of service data on which a packet loss occurs, for the second device to determine service data that needs to be retransmitted.

In this way, the second device can determine a packet that needs to be retransmitted.

In a possible implementation, the plurality of second packets include at least one retransmitted second packet.

In this way, the retransmitted second packet can be sent together with another second packet, so that the quantity of packet sending times is reduced, and packet sending efficiency can be improved.

In a possible implementation, the at least one retransmitted second packet includes a second packet whose service data is empty, and a time sequence attribute of the second packet whose service data is empty is a non-blocking attribute.

For example, if the second device determines that a new second packet of a service corresponding to the retransmitted second packet has been sent to the first device or is acknowledged by the first device, when a time sequence attribute corresponding to the service is a non-blocking attribute, the retransmitted second packet is equivalent to an old second packet and has become an invalid packet. In this case, only information such as the sequence number and the time sequence attribute needs to be carried, and the service data does not need to be carried for retransmission.

In this way, invalid retransmission of the packet can be avoided, and the information such as the sequence number is carried in a packet header and sent to the first device, so that disorder of an acknowledgment packet in the first device can be avoided.

In a possible implementation, the first device further stores response information, to indicate a response status of the second packet, and the response information includes a service identifier of a second packet that has been received by the first device; a packet header of the second packet further carries a service identifier, where the service identifier indicates a service corresponding to the service data carried in the second packet; and the method further includes:
when a time sequence attribute of the retransmitted second packet is a non-blocking attribute, the response information includes a target service identifier that is the same as the service identifier of the second packet, and a sequence number corresponding to the target service identifier is greater than the sequence number of the second packet, discarding the second packet.

In this way, the invalid retransmission of the packet can be avoided. In addition, for packets of a same service, when the first device has received a new packet, an old packet is an invalid packet. Discarding the invalid packet can save storage space and avoid disorder of the received packet.

In a possible implementation, the packet header of the second packet further carries a sequence field, and the sequence field indicates a ranking of a second packet with a blocking attribute in the waiting queue.

In a possible implementation, the packet header of the second packet further includes a bit length of the service data, and the method further includes: determining the service data in the second packet based on the sequence number and the bit length of the service data.

In a possible implementation, the first packet is an internet protocol IP packet, and the plurality of second packets are carried in a data field of the IP packet.

In a possible implementation, the first packet carries a user datagram protocol UDP packet, and the plurality of second packets are carried in a data field of the UDP packet.

According to a second aspect, an embodiment of this application provides a data transmission method, applied to a second device, where the second device communicates with a first device over Ethernet, and the method includes:
determining service data, where the service data carries a service identifier corresponding to the service data;
generating, based on the service identifier, a second packet including the service data, where the second packet carries a time sequence attribute of the second packet and a sequence number of the second packet, and the time sequence attribute indicates whether the service data needs to be added to a waiting queue;
generating a first packet based on second packets of a plurality of pieces of service data; and
sending the first packet to the first device.

According to this embodiment of this application, whether to add a packet to the waiting queue is determined based on different time sequence attributes of the packet. When the time sequence attribute of the packet is a non-blocking attribute, service data may be directly uploaded to an application layer of the first device, without waiting for service data corresponding to a sequence number less than a sequence number of the service data. In this way, a data receiving delay is reduced. In addition, time sequence preserving can be performed on data based on different time sequence attributes of the packet. For example, when the time sequence attribute of the packet is a blocking attribute, the data needs to be added to the waiting queue. When all service data within a sequence number range arrives at the first device, the service data within the sequence number range is uploaded to a service layer. When the time sequence attribute is a non-blocking attribute, old service data is invalid. Even if the old data is lost, the old data does not need to be retransmitted, and new data is directly uploaded to the application layer. This ensures a time sequence of the packet, and reduces the data receiving delay. In addition, one first packet may carry a plurality of ARTP packets, so that data transmission efficiency is improved.

In a possible implementation, the first packet is an IP packet, and the plurality of second packets are carried in a data field of the IP packet.

In a possible implementation, the first packet carries a UDP packet, and the plurality of second packets are carried in a data field of the UDP packet.

In a possible implementation, a packet header of the second packet further includes a bit length of the service data, for determining the service data in the second packet based on the sequence number.

In a possible implementation, the first packet further carries a response attribute of the first packet, the response attribute indicates a speed of responding to the first packet, the response attribute includes a quick response attribute and a slow response attribute, and a response speed corresponding to a packet with a quick response attribute is greater than a response speed corresponding to a packet with a slow response attribute.

In this way, the first device may respond to the second packet based on response speed requirements of different packets, so that a quantity of packet sending times can be reduced, and occupation of communication resources can be reduced.

In a possible implementation, the method further includes:
determining respective response attributes of the plurality of pieces of service data based on respective service identifiers of the plurality of pieces of service data; and
when a response attribute of at least one of the plurality of pieces of service data is a quick response attribute, determining that the response attribute of the first packet is a quick response attribute; or
when response attributes of all of the plurality of pieces of service data are slow response attributes, determining that the response attribute of the first packet is a slow response attribute.

In a possible implementation, the plurality of second packets include at least one retransmitted second packet, and when an attribute of the retransmitted second packet is a non-blocking attribute and the second device has generated a target packet, service data carried in the retransmitted second packet is empty, where the target packet is a second packet that belongs to a same service as the retransmitted second packet, and a sequence number of the target packet is greater than a sequence number of the retransmitted second packet.

In this way, invalid retransmission of the packet can be avoided, and the information such as the sequence number is carried in a packet header and sent to the first device, so that disorder of an acknowledgment packet in the first device can be avoided.

In a possible implementation, the method further includes:
receiving a response packet sent by the first device;
parsing the response packet to obtain a sequence number of a second packet on which a packet loss occurs; and
generating the retransmitted second packet based on the sequence number of the second packet on which the packet loss occurs.

According to a third aspect, an embodiment of this application provides a data transmission apparatus, used in a first device, where the first device communicates with a second device over Ethernet, and the apparatus includes:
a receiving module, configured to receive a first packet sent by the second device, where the first packet includes a plurality of second packets, each second packet in the plurality of second packets carries service data, a time sequence attribute of the second packet, and a sequence number of the second packet, and the time sequence attribute indicates whether the service data needs to be added to a waiting queue;
a queue waiting module, configured to: when the time sequence attribute of the second packet is a blocking attribute, add the service data carried in the second packet to the waiting queue; and
an uploading module, configured to: when the time sequence attribute of the second packet is a non-blocking attribute, upload the service data to an application layer of the first device.

The second packet is the adaptive reliable transmission protocol (Adaptive Reliable Transmission protocol, ARTP).

According to this embodiment of this application, whether to add a packet to the waiting queue is determined based on different time sequence attributes of the packet. When the time sequence attribute of the packet is a non-blocking attribute, service data may be directly uploaded to the application layer of the first device, without waiting for service data corresponding to a sequence number less than a sequence number of the service data. In this way, a data receiving delay is reduced. In addition, time sequence preserving can be performed on data based on different time sequence attributes of the packet. For example, when the time sequence attribute of the packet is a blocking attribute, the data needs to be added to the waiting queue. When all service data within a sequence number range arrives at the first device, the service data within the sequence number range is uploaded to a service layer. When the time sequence attribute is a non-blocking attribute, old service data is invalid. Even if the old data is lost, the old data does not need to be retransmitted, and new data is directly uploaded to the application layer. This ensures a time sequence of the packet, and reduces the data receiving delay. In addition, one first packet may carry a plurality of ARTP packets, so that data transmission efficiency is improved.

In a possible implementation, the first packet carries a response attribute of each second packet, and the response attribute indicates a speed of responding to the second packet.

The apparatus further includes:
a sending module, configured to send a response packet to the second device based on the response attribute of the second packet.

In this way, the second packet may be responded to based on response speed requirements of different packets, so that a quantity of packet sending times can be reduced, and occupation of communication resources can be reduced.

In a possible implementation, the sending module is configured to:
when the response attribute of the second packet is a quick response attribute, send the response packet of the second packet to the second device within a first preset time length; or
when the response attribute of the second packet is a slow response attribute, send the response packet of the second packet to the second device within a second preset time length, where
the first preset time length is less than the second preset time length.

In this way, the second packet may be responded to based on response speed requirements of different packets, so that a quantity of packet sending times can be reduced, and occupation of communication resources can be reduced.

In a possible implementation, the apparatus further includes:
a generation module, configured to: when the first device generates to-be-sent target service data within the second preset time length, generate a response packet including the to-be-sent target service data, where a destination address of the target service data is an address pointing to the second device.

In this way, service data that needs to be sent by the first device to the second device can be carried in the response packet and sent to the second device, so that the quantity of packet sending times can be reduced, and the occupation of the communication resources can be reduced.

In a possible implementation, the response packet includes a sequence number of service data on which a packet loss occurs, for the second device to determine service data that needs to be retransmitted.

In this way, the second device can determine a packet that needs to be retransmitted.

In a possible implementation, the plurality of second packets include at least one retransmitted second packet.

In this way, the retransmitted second packet can be sent together with another second packet, so that the quantity of packet sending times is reduced, and packet sending efficiency can be improved.

In a possible implementation, the at least one retransmitted second packet includes a second packet whose service data is empty, and a time sequence attribute of the second packet whose service data is empty is a non-blocking attribute.

For example, if the second device determines that a new second packet of a service corresponding to the retransmitted second packet has been sent to the first device or is acknowledged by the first device, when a time sequence attribute corresponding to the service is a non-blocking attribute, the retransmitted second packet is equivalent to an old second packet and has become an invalid packet. In this case, only information such as the sequence number and the time sequence attribute needs to be carried, and the service data does not need to be carried for retransmission.

In this way, invalid retransmission of the packet can be avoided, and the information such as the sequence number is carried in a packet header and sent to the first device, so that disorder of an acknowledgment packet in the first device can be avoided.

In a possible implementation, the first device further stores response information, to indicate a response status of the second packet, and the response information includes a service identifier of a second packet that has been received by the first device; a packet header of the second packet further carries a service identifier, where the service identifier indicates a service corresponding to the service data carried in the second packet; and the apparatus further includes:
a discarding module, configured to: when a time sequence attribute of the retransmitted second packet is a non-blocking attribute, the response information includes a target service identifier that is the same as the service identifier of the second packet, and a sequence number corresponding to the target service identifier is greater than the sequence number of the second packet, discard the second packet.

In this way, the invalid retransmission of the packet can be avoided. In addition, for packets of a same service, when the first device has received a new packet, an old packet is an invalid packet. Discarding the invalid packet can save storage space and avoid disorder of the received packet.

In a possible implementation, the packet header of the second packet further carries a sequence field, and the sequence field indicates a ranking of a second packet with a blocking attribute in the waiting queue.

In a possible implementation, the packet header of the second packet further includes a bit length of the service data, and the apparatus further includes: a determining module, configured to determine the service data in the second packet based on the sequence number and the bit length of the service data.

In a possible implementation, the first packet is an internet protocol IP packet, and the plurality of second packets are carried in a data field of the IP packet.

In a possible implementation, the first packet carries a user datagram protocol UDP packet, and the plurality of second packets are carried in a data field of the UDP packet.

According to a fourth aspect, an embodiment of this application provides a data transmission apparatus, used in a second device, where the second device communicates with a first device over Ethernet, and the apparatus includes:
a determining module, configured to determine service data, where the service data carries a service identifier corresponding to the service data;
a generation module, configured to: generate, based on the service identifier, a second packet including the service data, where the second packet carries a time sequence attribute of the second packet and a sequence number of the second packet, and the time sequence attribute indicates whether the service data needs to be added to a waiting queue; and
generate a first packet based on second packets of a plurality of pieces of service data; and
a sending module, configured to send the first packet to the first device.

According to this embodiment of this application, whether to add a packet to the waiting queue is determined based on different time sequence attributes of the packet. When the time sequence attribute of the packet is a non-blocking attribute, service data may be directly uploaded to an application layer of the first device, without waiting for service data corresponding to a sequence number less than a sequence number of the service data. In this way, a data receiving delay is reduced. In addition, time sequence preserving can be performed on data based on different time sequence attributes of the packet. For example, when the time sequence attribute of the packet is a blocking attribute, the data needs to be added to the waiting queue. When all service data within a sequence number range arrives at the first device, the service data within the sequence number range is uploaded to a service layer. When the time sequence attribute is a non-blocking attribute, old service data is invalid. Even if the old data is lost, the old data does not need to be retransmitted, and new data is directly uploaded to the application layer. This ensures a time sequence of the packet, and reduces the data receiving delay. In addition, one first packet may carry a plurality of ARTP packets, so that data transmission efficiency is improved.

In a possible implementation, the first packet is an IP packet, and the plurality of second packets are carried in a data field of the IP packet.

In a possible implementation, the first packet carries a UDP packet, and the plurality of second packets are carried in a data field of the UDP packet.

In a possible implementation, a packet header of the second packet further includes a bit length of the service data, for determining the service data in the second packet based on the sequence number.

In a possible implementation, the first packet further carries a response attribute of the first packet, the response attribute indicates a speed of responding to the first packet, the response attribute includes a quick response attribute and a slow response attribute, and a response speed corresponding to a packet with a quick response attribute is greater than a response speed corresponding to a packet with a slow response attribute.

In this way, the first device may respond to the second packet based on response speed requirements of different packets, so that a quantity of packet sending times can be reduced, and occupation of communication resources can be reduced.

In a possible implementation, the determining module is further configured to:
determine respective response attributes of the plurality of pieces of service data based on respective service identifiers of the plurality of pieces of service data; and
when a response attribute of at least one of the plurality of pieces of service data is a quick response attribute, determine that the response attribute of the first packet is a quick response attribute; or
when response attributes of all of the plurality of pieces of service data are slow response attributes, determine that the response attribute of the first packet is a slow response attribute.

In a possible implementation, the plurality of second packets include at least one retransmitted second packet, and when an attribute of the retransmitted second packet is a non-blocking attribute and the second device has generated a target packet, service data carried in the retransmitted second packet is empty, where the target packet is a second packet that belongs to a same service as the retransmitted second packet, and a sequence number of the target packet is greater than a sequence number of the retransmitted second packet.

In this way, invalid retransmission of the packet can be avoided, and the information such as the sequence number is carried in a packet header and sent to the first device, so that disorder of an acknowledgment packet in the first device can be avoided.

In a possible implementation, the apparatus further includes:
a receiving module, configured to receive a response packet sent by the first device; and
a parsing module, configured to parse the response packet to obtain a sequence number of a second packet on which a packet loss occurs.

The generation module is further configured to generate the retransmitted second packet based on the sequence number of the second packet on which the packet loss occurs.

According to a fifth aspect, an embodiment of this application provides a computing device, including: at least one memory, configured to store a program; and at least one processor, configured to execute the program stored in the memory, where when the program stored in the memory is executed, the processor is configured to perform the method provided in the first aspect or the method provided in the second aspect.

According to a sixth aspect, an embodiment of this application provides a data transmission apparatus. The apparatus runs computer program instructions, to perform the method provided in the second aspect or the method provided in the third aspect. For example, the apparatus may be a chip or a processor.

In an example, the apparatus may include a processor. The processor may be coupled to a memory, read instructions in the memory, and perform, according to the instructions, the method provided in the second aspect or the method provided in the third aspect. The memory may be integrated into a chip or a processor, or may be independent of the chip or the processor.

According to a seventh aspect, an embodiment of this application provides a computer storage medium. The computer storage medium stores instructions, and when the instructions are run on a computer, the computer is enabled to perform the method provided in the first aspect or the method provided in the second aspect.

According to an eighth aspect, an embodiment of this application provides a computer program product including instructions. When the instructions are run on a computer, the computer is enabled to perform the method provided in the first aspect or the method provided in the second aspect.

### BRIEF DESCRIPTION OF DRAWINGS

FIG. 1 is a diagram of a system architecture of an in-vehicle network of an intelligent connected vehicle according to an embodiment of this application;
FIG. 2 is a diagram of a TCP/IP protocol suite according to an embodiment of this application;
FIG. 3 is a diagram of an architecture of a data transmission system according to an embodiment of this application;
FIG. 4a is a diagram of a format of an ARTP packet according to an embodiment of this application;
FIG. 4b is a diagram of a format of another ARTP packet according to an embodiment of this application;
FIG. 5 is a schematic flowchart of a data transmission method according to an embodiment of this application;
FIG. 6a is a diagram of a format of a first packet according to an embodiment of this application;
FIG. 6b is a diagram of a format of another first packet according to an embodiment of this application;
FIG. 7 is an example diagram of a format of a first packet according to an embodiment of this application;
FIG. 8 is a diagram of processing a plurality of ARTP packets according to an embodiment of this application;
FIG. 9 is a schematic flowchart of a service data retransmission method according to an embodiment of this application;
FIG. 10 is a diagram of a sequence number queue according to an embodiment of this application;
FIG. 11 is a diagram of another sequence number queue according to an embodiment of this application;
FIG. 12 is a schematic flowchart of another service data retransmission method according to an embodiment of this application;
FIG. 13 is a diagram of still another sequence number queue according to an embodiment of this application;
FIG. 14 is a diagram of a structure of a data transmission apparatus according to an embodiment of this application;
FIG. 15 is a diagram of a structure of another data transmission apparatus according to an embodiment of this application; and
FIG. 16 is a diagram of a structure of a computing device according to an embodiment of this application.

### DESCRIPTION OF EMBODIMENTS

To make objectives, technical solutions, and advantages of embodiments of this application clearer, the following describes the technical solutions in embodiments of this application with reference to accompanying drawings.

In the descriptions of embodiments of this application, words such as "example", "for example", or "in an example" are used to represent an example, an illustration, or a description. Any embodiment or design solution described as "example", "for example", or "in an example" in embodiments of this application should not be interpreted as being more preferred or advantageous than another embodiment or design solution. Specifically, the use of the words such as "example", "for example", or "in an example" is intended to present related concepts in a specific manner.

In descriptions of embodiments of this application, the term "and/or" is merely an association relationship for describing associated objects, and indicates that three relationships may exist. For example, A and/or B may indicate: only A exists, only B exists, and both A and B exist. In addition, unless otherwise specified, the term "a plurality of" means two or more. For example, a plurality of systems means at least two systems, and a plurality of terminals means at least two terminals.

In addition, the terms "first" and "second" are merely used for a purpose of description, and shall not be understood as indicating or implying relative importance or implicitly including indicated technical features. In this way, a feature limited by "first" or "second" may explicitly or implicitly include one or more features. The terms "comprise", "include", "have", and other variants thereof all mean "include but is not limited to", unless otherwise specifically emphasized in another manner.

The internet of things is an information carrier based on the internet, a conventional telecommunications network, and the like, and enables all computing devices that can be independently addressed to form an interconnected network. Ethernet has advantages such as high real-time performance, a long transmission distance, and a strong anti-interference capability. As application scenarios covered by the internet of things are increasing, Ethernet is increasingly widely applied to an intelligent connected vehicle scenario, a smart building scenario, and the like in the internet of things.

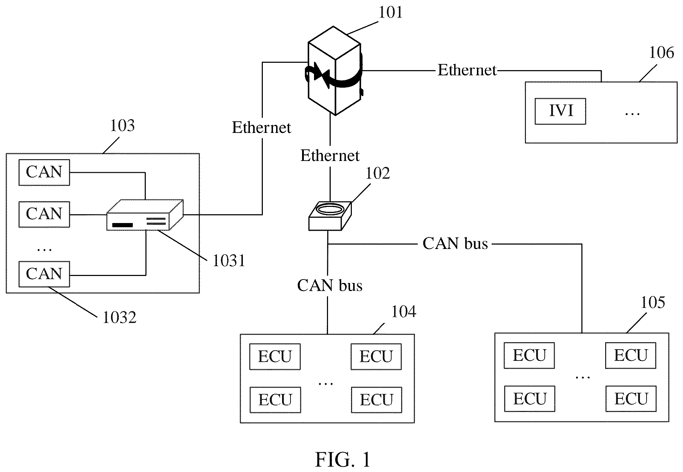

In the intelligent connected vehicle application scenario, communication of an intelligent connected vehicle includes in-vehicle communication. The in-vehicle communication means that a vehicle-mounted terminal, an in-vehicle sensor, and an electronic control apparatus are used as communication bodies for communication, to form an in-vehicle communication network, and mainly relates to communication protocols such as the controller area network (Controller Area Network, CAN), the FlexRay (FlexRay), and the automotive Ethernet. As shown in FIG. 1, currently, an in-vehicle network of an intelligent connected vehicle in a related technology includes a central gateway 101, a CAN gateway 102, an assisted driving system 103, a power chassis system 104, a vehicle body control system 105, and another system 106 (for example, an entertainment system). The central gateway is connected to each system inside the vehicle, so that the central gateway can serve as an interface for communication between an electronic component or apparatus inside the vehicle and a device outside the vehicle. In addition, the central gateway 101 can further serve as a communication interface between electronic components or apparatuses inside the vehicle, to forward a signal. For example, the assisted driving system can communicate with the power chassis system and the vehicle body control system through the central gateway. The assisted driving system includes a plurality of modules 1032 that communicate through a CAN bus, for example, a lidar, a millimeter-wave radar, and a vehicle-mounted camera. The assisted driving system further includes a controller, configured to control communication between the modules 1032 and communication between the module 1032 and a module outside the assisted driving system. The power chassis control system includes a plurality of electronic control units (Electronic Control Units, ECUs), which can respectively perform engine control, speed adjustment control, and the like on the vehicle. The vehicle body control system includes a plurality of ECUs, which can respectively perform vehicle door control, airbag control, vehicle light control, and the like.

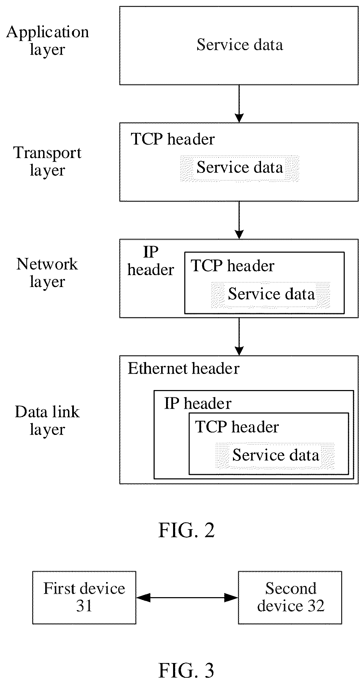

Currently, communication is performed over Ethernet by using a protocol in a TCP/IP (transmission control protocol/internet protocol) protocol suite. As shown in FIG. 2, a TCP/IP protocol suite may be divided into an application layer, a transport layer, a network layer, and a data link layer by layer. The transport layer provides a service for data transmission between two apparatuses or devices in a network connection. Protocols used at the transport layer include TCP and the user datagram protocol (UDP, User Datagram Protocol).

As shown in FIG. 1, a process in which a power control system communicates with the assisted driving system includes a CAN signal-TCP/IP packet-CAN signal data conversion process. To be specific, a CAN signal needs to be carried in a TCP/IP packet and transmitted in the in-vehicle communication network over Ethernet.

In the TCP/IP protocol suite, TCP is a connection-oriented and reliable byte stream-based service. "Connection-oriented" means that a TCP connection needs to be established first between a transmitting end and a receiving end before a connection is established between applications that use the TCP protocol. TCP sets a fast retransmit (Fast Retransmit, FR) mechanism, a retransmission timeout (Retransmission Timeout, RTO) mechanism, and a congestion control mechanism, to ensure a data sequence in a transmission process. However, because TCP needs to ensure the data sequence in the data transmission process, the receiving end needs to receive data in a data transmission sequence. As a result, once a packet loss occurs in the transmission process of the data, data following the data is blocked. Consequently, when a TCP data transmission manner is used, real-time performance of the data transmission is low. In addition, a TCP data transmission mechanism also determines that a TCP packet is used as data of an IP packet, and one Ethernet/IP packet can carry only one TCP packet. Consequently, when the TCP data transmission manner is used, data transmission efficiency is low.

In addition, a manner in which TCP ensures the data sequence during transmission cannot satisfy a scenario in which the data sequence during transmission does not need to be completely ensured. For example, a vehicle driver steps on a brake in a driving process, but a brake signal is lost in a transmission process, and the vehicle driver steps on the brake again. However, because the first brake signal is lost, and the central gateway requires that the first brake signal be retransmitted, and cannot receive the second brake signal, an ECU that controls the brake cannot receive the second brake signal either. As a result, the vehicle cannot be braked. Actually, when the first brake signal is lost and the second brake signal has been generated, the first brake signal is invalid data, and the central gateway does not need to wait for the first brake signal to be successfully retransmitted and then receive the second brake signal, but may directly receive the second brake signal to complete the braking action, regardless of whether the first brake signal is successfully retransmitted.

For another example, in smart building, in temperature data at 12:01 and temperature data at 12:02, the temperature data at 12:01 may be considered as invalid temperature data. Therefore, when a packet loss occurs in a transmission process of the temperature data at 12:01, and the temperature data at 12:02 is obtained, the temperature data at 12:02 may be directly sent to the application layer for data processing.

It can be learned from the foregoing content that, in the manner in which TCP ensures the data transmission sequence, some scenarios in which the data transmission sequence does not need to be ensured cannot be satisfied, real-time performance of the data transmission is low, data transmission efficiency is low, and data transmission flexibility is low.

In the TCP/IP protocol suite, a blocking-free transmission mechanism is set in a data transmission mechanism of quick user datagram protocol (User Datagram Protocol, UDP) internet connections (Quick UDP Internet Connections, QUIC), so that data transmission efficiency is improved while data transmission reliability is ensured. Statuses of a plurality of data streams need to be maintained between the transmitting end and the receiving end. One data stream corresponds to one service. However, to maintain the statuses of the data streams, many memory resources and management resources need to be occupied. This is not applicable to some internet of things scenarios, for example, the intelligent connected vehicle application scenario and the smart building application scenario.

Based on this, an embodiment of this application provides a new data transmission protocol, which is referred to as the adaptive reliable transmission protocol (Adaptive Reliable Transmission protocol, ARTP) below, and supports one Ethernet/IP packet to simultaneously carry a plurality of ARTP packets, where the plurality of ARTP packets include a retransmitted ARTP packet. In this way, this embodiment of this application can improve data transmission efficiency. In addition, each ARTP packet may carry a response attribute, so that a receiving end automatically adjusts an ACK frequency based on the response attribute. In this way, the receiving end may include new data in an ACK packet and send the ACK packet to a transmitting end, improving data transmission efficiency. In addition, the ARTP packet may further carry a time sequence attribute, where the time sequence attribute includes a blocking attribute and a non-blocking attribute. The blocking attribute indicates that data needs to be uploaded to an application layer strictly according to a time sequence. The non-blocking attribute indicates that data carried in a packet can be uploaded to the application layer after the packet is received, without waiting for data on which a packet loss occurs to be retransmitted, and the data does not need to be added to a waiting queue, reducing unnecessary data waiting time. Finally, the transmitting end does not need to retain a data stream status of each service, but checks only a service corresponding to a packet in a retransmission window, so that overheads of many memory resources are reduced.

The following describes in detail a data transmission system provided in an embodiment of this application.

FIG. 3 is a diagram of an architecture of a data transmission system according to an embodiment of this application. As shown in FIG. 3, the data transmission system provided in this embodiment of this application includes a first device 31 and a second device 32. Data transmission can be performed between the first device 31 and the second device 32. The first device may be a data transmitting end, or may be a data receiving end. Similarly, when the first device is a data transmitting end, the second device is a data receiving end. When the first device is a data receiving end, the second device is a data transmitting end.

Herein, the data transmission system provided in this embodiment of this application may be applied to a plurality of scenarios, for example, the foregoing internet of things scenarios of the intelligent connected vehicle and the smart building, or a scenario of two devices that communicate with each other over a network. This is not specifically limited in this embodiment of this application.

The first device and the second device provided in this embodiment of this application each may be a computing device like a server, a mobile phone, or a computer. Alternatively, the first device and the second device may be two devices with a data transmission function in a same vehicle. The computing device in this embodiment of this application includes but is not limited to a computing device running iOS, Android, Windows, Harmony OS (Harmony OS), or another operating system. A type of the computing device is not specifically limited in this embodiment of this application. In an example, the computing device may have a sensor configured to collect data. For example, the sensor may be a temperature sensor configured to monitor a temperature, or the sensor may be a sensor configured to monitor a driving speed of a vehicle.

The data transmission system provided in this embodiment of this application can perform data transmission according to ARTP provided in embodiments of this application. The following describes in detail a format of an ARTP packet provided in an embodiment of this application.

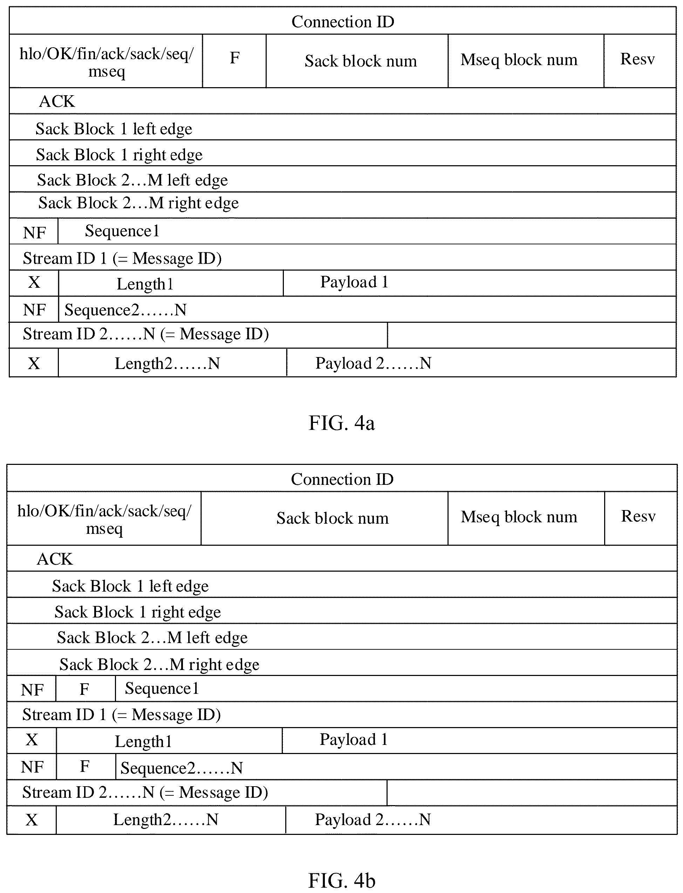

FIG. 4a is a diagram of a format of an ARTP packet according to an embodiment of this application. As shown in FIG. 4a, the ARTP packet provided in this embodiment of this application includes a plurality of fields, for example, a time sequence attribute NF, a sequence number of the ARTP packet (Sequence), a data length (Length), a stream (stream) identifier (Identity Document, ID), a payload (payload), and a field X indicating whether the ARTP packet is an empty packet, where X=1 indicates that the ARTP packet is an empty packet. The time sequence attribute indicates whether the ARTP packet needs to be added to a waiting queue, so that a receiving end of the packet uploads, to an upper-layer application in a time sequence, data carried in the ARTP packet. The payload is used to carry service data. The data length indicates a bit length of the data carried in the ARTP packet.

In some embodiments, the stream ID is a packet ID (message ID), or may be a service ID. For example, in an intelligent connected vehicle scenario, the stream ID is a packet ID. The stream ID can identify whether ARTP packets belong to a same service.

In addition, to improve data transmission efficiency, in this embodiment of this application, a plurality of ARTP packets are packaged for transmission in a data transmission process. In this way, a packet obtained after the plurality of ARTP packets are packaged further includes a common packet header. As shown in FIG. 4a and FIG. 4b, the common packet header includes a connection relationship identifier (connection ID), an acknowledgment number (ACK), a reserved bit (ReSv), a quantity of selective acknowledgment blocks (Sack block num), a quantity of ARTP packets (Mseq block num), a handshake packet field hlo (hlo=1 indicates that a first packet is a handshake packet), a reply packet field OK of the handshake packet (OK=1 indicates that the first packet is a reply packet), a connection status field fin (fin=1 indicates that the first device is disconnected from the second device), a field ack indicating whether an acknowledgment packet is included (ack=1 indicates that an acknowledged data packet is included), a field SACK indicating whether a selective acknowledgment packet is included (SACK=1 indicates that a selective acknowledgment data packet is included), a field seq indicating whether service data is carried (seq=1 indicates that the service data is carried), and Mseq indicating whether a plurality of pieces of service data are carried (Mseq=1 indicates that the first packet carries the plurality of pieces of service data).

The connection relationship identifier indicates port identifiers of devices that have a connection relationship, for example, including an identifier of a source port and an identifier of a destination port. A response attribute indicates a speed of responding to a plurality of ARTP packets.

In a possible implementation, as shown in FIG. 4a, a field F of the response attribute for the plurality of ARTP packets is located in the common packet header. The response attribute includes a quick response attribute and a slow response attribute. After parsing an ARTP packet with a quick response attribute, the receiving end needs to send a response packet to the transmitting end immediately. After parsing an ARTP packet with a slow response attribute, the receiving end may send a response packet to the transmitting end after a period of time.

In the plurality of ARTP packets, different ARTP packets have different response attributes. In another possible implementation, as shown in FIG. 4b, a packet header of each ARTP packet further includes a field of the response attribute.

Sack Block i left edge indicates a start point of a sequence number of the i^{th} piece of data that needs to be retransmitted, and Sack Block i right edge indicates an end point of the sequence number of the i^{th} piece of data that needs to be retransmitted, where i=1, 2, ..., or N.

In some embodiments, for example, NF=00 indicates that the time sequence attribute of the ARTP packet is a non-blocking attribute, NF=01 indicates that the time sequence attribute of the ARTP packet is a blocking attribute, and the ARTP packet is a start point of a plurality of ARTP packets with a blocking attribute. NF=10 indicates that the time sequence attribute of the ARTP packet is a blocking attribute, and the ARTP packet is an intermediate packet of the plurality of ARTP packets with a blocking attribute. NF=11 indicates that the time sequence attribute of the ARTP packet is a blocking attribute, and the ARTP packet is an end point of the plurality of ARTP packets with a blocking attribute.

It should be noted that representation manners of some fields in the ARTP packet may be determined based on a requirement of the ARTP packet. For example, "Q" may identify the quick response attribute, that is, F=Q, and "S" may identify the slow response attribute, that is, F=S. For another example, "1" may identify the quick response attribute, that is, F=1, and "0" may identify the slow response attribute, that is, F=0. This is merely an example for description, and the response attribute may alternatively be represented in another manner. This is not specifically limited.

In some embodiments, a sequence number may be a digit, and can indicate a sequence of an ARTP packet corresponding to the sequence number in a queue at the transmitting end. For example, if Sequence=1, service data carried in the ARTP packet ranks 1^{st} in the queue at the transmitting end. In a possible implementation, the sequence number can indicate a start point of a bit of the service data carried in the ARTP packet. The service data in the ARTP is determined based on the sequence number and a data length of the ARTP packet. For example, an IP packet carries an ARTP packet ARTP1. In a packet header of ARTP 1, Sequence=10, and Length=89. To be specific, service data of ARTP 1 starts from the 10^{th} byte and ends with the 90^{th} byte in ARTP1.

The following describes in detail, based on the data transmission system provided in the embodiment shown in FIG. 3 and the formats of the ARTP packet shown in FIG. 4a and FIG. 4b, a solution for performing data transmission by using ARTP in this embodiment of this application.

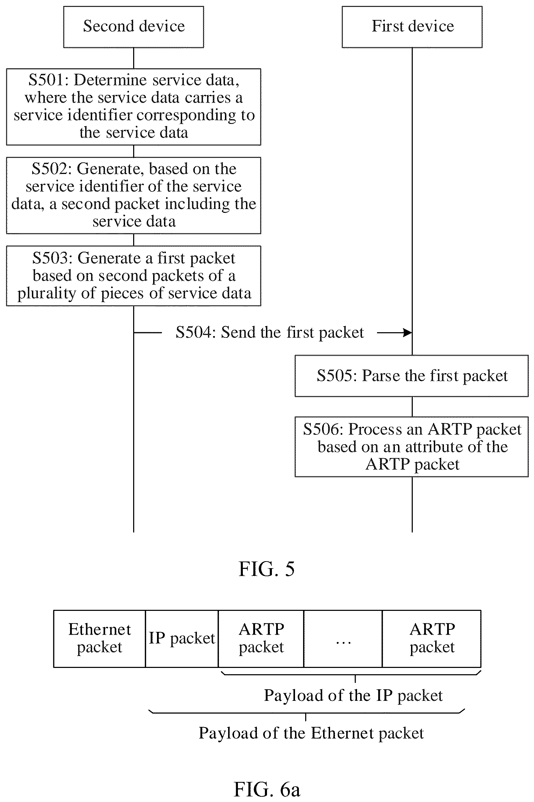

FIG. 5 is a schematic flowchart of a data transmission method according to an embodiment of this application. The data transmission method provided in this embodiment of this application can be applied to the data transmission system in the embodiment in FIG. 3. As shown in FIG. 5, the data transmission method provided in this embodiment of this application includes S501 to S506.

S501: A second device determines service data, where the service data carries a service identifier corresponding to the service data.

The service data is data generated after a service is performed, for example, a brake signal of a vehicle in a driving process, or temperature data measured by a temperature sensor. The service data is data generated by an application layer of the second device.

In this embodiment of this application, the application layer can generate at least one piece of service data. In a possible implementation, the at least one piece of service data may be service data belonging to a same service. In another possible implementation, a part of the at least one piece of service data may be service data belonging to a same service. In still another possible implementation, the at least one piece of service data may be service data belonging to different services.

S502: The second device generates, based on the service identifier of the service data, a second packet including the service data.

The second device stores attribute information corresponding to different service identifiers. The attribute information indicates an attribute of the service data. In this embodiment of this application, the service data has a plurality of attributes, and the attribute of the service data is used to determine an attribute of an ARTP packet, for example, the response attribute and the time sequence attribute shown in the format of the ARTP packet shown in FIG. 4a. Herein, the attribute of the service data includes a response attribute and a time sequence attribute, and meanings of the response attribute and the time sequence attribute are the same as those in the embodiment corresponding to FIG. 4a. For details, refer to the descriptions of the response attribute and the time sequence attribute in the embodiment corresponding to FIG. 4a.

In some embodiments, the time sequence attribute of the service data may be determined based on the service identifier of the service data. Specifically, different services have different requirements on a time sequence. Therefore, different services may correspond to different time sequence attributes, and the time sequence attribute of the service data is a time sequence attribute corresponding to the service to which the service data belongs. For example, a brake signal at the i^{th} second is an invalid signal relative to a brake signal at the (i+2)^{th} second. When the device receives the brake signal at the i^{th} second after the brake signal at the (i+2)^{th} second, the device may directly discard the brake signal at the i^{th} second, without uploading the brake signal at the i^{th} second to an upper-layer application. Therefore, a time sequence attribute corresponding to a brake event may be non-blocking.

The second device determines an attribute of each piece of service data based on a service identifier of the service data. The second device generates the second packet based on the attribute of the service data. Herein, the second packet is an ARTP packet, and the ARTP packet is used to replace the second packet to describe each step below.

Each piece of service data corresponds to one ARTP packet. A packet header of the ARTP packet includes a time sequence attribute of the service data, a bit length of the service data, and a sequence number of the ARTP packet. A payload of the ARTP packet is the service data. Specifically, the service data is encapsulated based on the attribute of the service data, to obtain the ARTP packet corresponding to the service data.

S503: The second device generates a first packet based on second packets of a plurality of pieces of service data.

The first packet is a carrier that carries a plurality of ARTP packets. In other words, the first packet may include the plurality of ARTP packets.

In a possible implementation, as shown in FIG. 6a, the first packet may be an IP packet. A payload of the IP packet includes ARTP packets of a plurality of pieces of service data.

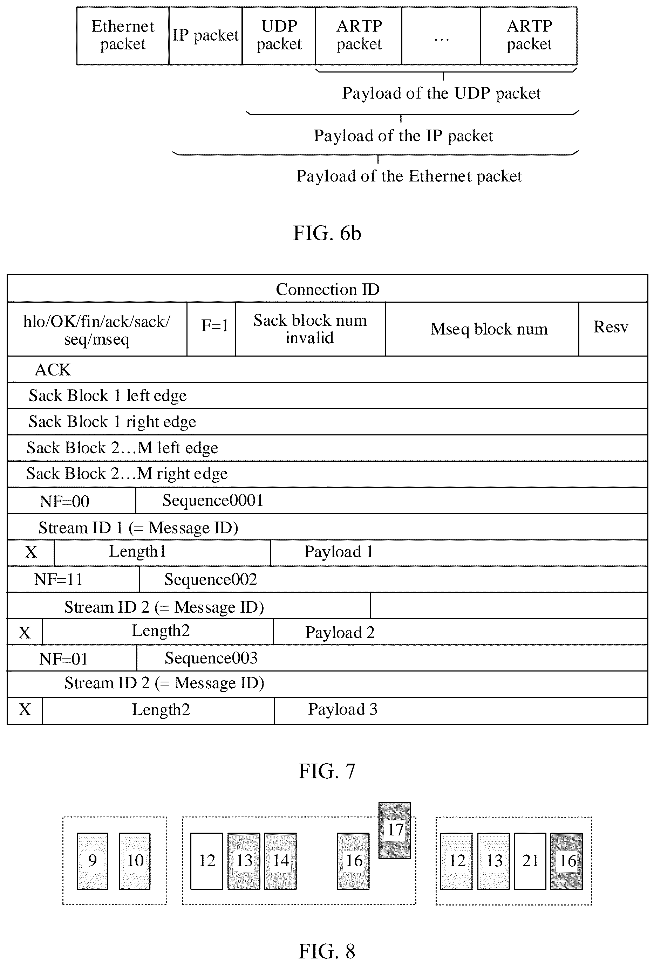

In another possible implementation, as shown in FIG. 6b, the first packet may be a UDP packet. A payload of the UDP packet includes ARTP packets of a plurality of pieces of service data.

In some embodiments, the first packet includes a common packet header, to be specific, a packet header shared by the plurality of ARTP packets. A response attribute in the common packet header is generated based on respective response attributes of the plurality of pieces of service data. Specifically, when a response attribute of at least one of the plurality of pieces of service data is a quick response attribute, the response attribute in the common packet header is a quick response attribute. When response attributes of the plurality of pieces of service data are all slow response attributes, the response attribute in the common packet header is a slow response attribute. For example, in a response attribute field, the quick response attribute is represented as "1", and the slow response attribute is represented as "0".

For example, as shown in FIG. 7, the plurality of pieces of service data are respectively service data data1, service data data2, and service data data3. A response attribute of the service data data1 is a quick response attribute, a response attribute of the service data data2 is a slow response attribute, and a response attribute of the service data data3 is a slow response attribute. A time sequence attribute of the service data data1 is blocking, a time sequence attribute of the service data2 is non-blocking, and a time sequence attribute of the service data data3 is non-blocking. Because the response attribute of the service data data1 in the plurality of pieces of service data is a slow response attribute, a time sequence attribute in a common packet header is a quick response attribute, that is, F=1. As shown in FIG. 7, a packet header of an ARTP packet ARTP1 corresponding to the service data data1 includes a sequence number 0001 and a time sequence attribute blocking, and ARTP 1 is a start point of ARTP packets with a blocking attribute, that is, NF=00. A packet header of an ARTP packet ARTP2 corresponding to the service data data2 includes a sequence number 0002 and a time sequence attribute blocking, and ARTP2 is an end point of ARTP packets with a blocking attribute, that is, NF=11. An ARTP packet ARTP3 corresponding to the service data data3 includes a sequence number 0003 and a time sequence attribute non-blocking, that is, NF=0.

S504: The second device sends the first packet to a first device.

In this way, the second device can include the plurality of ARTP packets in one packet and send the packet to the first device, to improve data sending efficiency.

S505: The first device parses the first packet.

The first device parses the packet, to determine the attributes, for example, the response attributes and the time sequence attributes, of the plurality of ARTP packets; and to determine the service data carried in each ARTP packet, the sequence number of the service data, and the like.

S506: The first device processes the ARTP packet based on the attribute of the ARTP packet.

Different attributes include different processing steps. The response attribute indicates a speed of responding to the ARTP packet. The time sequence attribute indicates whether the service data carried in the ARTP packet needs to be added to a waiting queue.

The following describes S506 in detail by using an example in which the attribute of the ARTP packet is the time sequence attribute.

The time sequence attribute of the ARTP packet includes a blocking attribute and a non-blocking attribute. The second device caches a packet sequence number table used to record a sequence number of an ARTP packet that has been received. In a possible implementation, the packet sequence number record table records only the sequence number of the ARTP packet that has been received, that is, a sequence number that has been acknowledged. In another possible implementation, the packet sequence number record table records only a current continuously received maximum sequence, to further save storage space. For example, if AckSeq=40, it indicates that the first device receives service data whose sequence numbers are 0 to 39. Next, service data whose sequence number is 40 needs to be received. For another example, if AckList[]={[80,100], [120,140]}, it indicates that the first device has received service data whose sequence numbers are 80 to 99 and service data whose sequence numbers are 120 to 139, and sequence numbers of service data on which a packet loss occurs are 100 to 119, that is, the service data whose sequence numbers are 100 to 119 needs to be retransmitted. For a specific retransmission process, refer to the following descriptions. Details are not described herein.

When an ARTP packet has a blocking attribute, the ARTP packet carries a sequence number. In addition, when the ARTP packet has a blocking attribute, the first device determines, based on the packet sequence number list, whether all ARTP packets with a blocking attribute have been received. Herein, in the packet sequence number list, if an ARTP packet ARTP-O as a start point that has a blocking attribute has been received, and an ARTP packet ARTP-E as an end point that has a blocking attribute has been received, when the first device does not receive an ARTP packet whose sequence number is between ARTP-O and ARTP-E, the first device needs to add service data carried in the ARTP packet ARTP-O and the ARTP packet ARTP-E to the waiting queue. If an ARTP packet ARTP-O as a start point that has a blocking attribute has been received, and an ARTP packet ARTP-E as an end point that has a blocking attribute has been received, when the first device has received an ARTP packet whose sequence number is between ARTP-O and ARTP-E, the first device uploads service data carried in the ARTP packet ARTP-O and the ARTP packet ARTP-E to the application layer.

When an ARTP packet has a non-blocking attribute, the first device does not need to add service data in the ARTP packet to the waiting queue, but directly uploads the service data obtained through parsing to the application layer. For example, as shown in FIG. 8, time sequence attributes of an ARTP packet 9 and an ARTP packet 10 are both non-blocking attributes. In this case, when an ARTP packet 8 and an ARTP packet 11 are lost, the first device can directly submit the ARTP packet 9 and the ARTP packet 10 to the application layer. Time sequence attributes of an ARTP packet 12 to an ARTP packet 17 are all blocking attributes, that is, service data thereof needs to be submitted to the application layer in a sequence of sequence numbers. After the first device receives the ARTP packet 12, the ARTP packet 13, the ARTP packet 14, the ARTP packet 16, and the ARTP packet 17, the first device can upload the ARTP packet 12 to the ARTP packet 17 to the application layer in a sequence of sequence numbers only after the ARTP packet 15 arrives. Time sequence attributes of an ARTP packet 19 and an ARTP packet 20 are non-blocking attributes. In this case, the first device does not need to wait for the ARTP packet 15 to be received, but the first device can upload the ARTP packet 19 and the ARTP packet 20 to the application layer when the ARTP packet 15 is not received. Time sequence attributes of an ARTP packet 21 and an ARTP packet 22 are blocking attributes, but the first device has received the ARTP packet 21 and the ARTP packet 22. In this case, the first device can directly upload the ARTP packet 21 and the ARTP packet 22 to the application layer.

The foregoing describes in detail the time sequence attribute of the ARTP packet in this embodiment of this application. The following describes S506 in detail by using an example in which the attribute of the ARTP packet is the response attribute.

The response attribute of the ARTP packet includes a quick response attribute and a slow response attribute. Response attributes of ARTP packets corresponding to different services are different. The quick response attribute indicates that a response packet of an ARTP packet is sent to the second device within a first preset time length. The slow response attribute indicates that a response packet of an ARTP packet is sent to the second device within a second preset time length. Herein, the first preset time length and the second preset time length both may be set based on a service requirement. This is not specifically limited in this application.

S506 specifically includes the following processes: When the response attribute of the ARTP packet is a quick response attribute, the response packet of the ARTP packet is sent to the second device within the first preset time length. When the response attribute of the ARTP packet is a slow response attribute, the response packet of the ARTP packet is sent to the second device within the second preset time length.

For example, when a response attribute of an ARTP packet is a quick response attribute, after parsing the ARTP packet, the first device immediately sends a response packet to the second device depending on whether a packet loss occurs and the like. When a response attribute of an ARTP packet is a slow response attribute, after parsing the ARTP packet, the first device sends a response packet to the second device after waiting for a period of time.

In a possible implementation, when a response attribute of an ARTP packet is a slow response attribute, the first device needs to send target service data to the second device within second preset time. In this case, the first device may include the target service data in a response packet and send the response packet to the second device, to reduce a quantity of packet sending times, so that occupation of communication resources can be reduced.

In this way, the first device can respond to the ARTP packet by using different response attributes, so that a quantity of times of returning the response packet can be reduced, and the occupation of the communication resources can be reduced.

In some embodiments, the first device can generate a response packet depending on whether a packet loss occurs and based on service data sent by the first device to the second device, so that the second device determines a packet that needs to be retransmitted. The following describes in detail a data retransmission process in an embodiment of this application.

Herein, service data that needs to be retransmitted may be determined by the first device, or the service data that needs to be retransmitted may be determined by the second device. The following separately describes the foregoing two cases in detail.

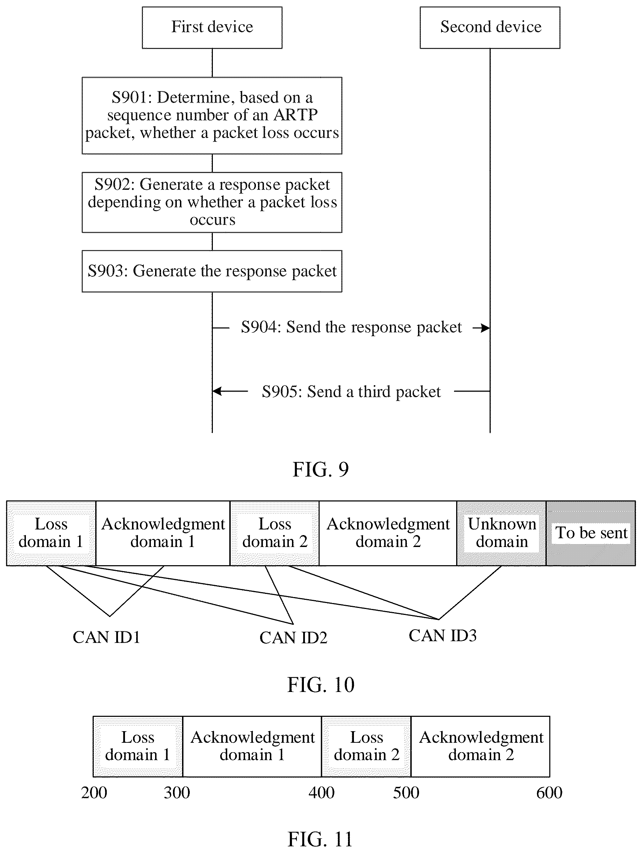

FIG. 9 is a schematic flowchart of a service data retransmission method according to an embodiment of this application. As shown in FIG. 9, the service data retransmission method provided in this embodiment of this application may include steps S901 to S905. Herein, before S901, the method further includes S501 to S505 in the embodiment corresponding to FIG. 5. S901 and S902 may be considered as a possible implementation of S506.

S901: The first device determines, based on a sequence number of an ARTP packet, whether a packet loss occurs.

The first device determines, based on a sequence number of a packet that has been received, whether a packet loss occurs. For example, sequence numbers of packets that have been received by the first device include 0001, 0002, 0004, and 0005. In other words, a packet loss occurs on an ARTP packet whose sequence number is 0003.

S902: The first device generates a response packet depending on whether a packet loss occurs.

When the packet loss occurs, the first device generates a response packet based on a sequence number of an ARTP packet on which the packet loss occurs. Specifically, to reduce a quantity of packet sending times, the first device can include the ARTP packet on which the packet loss occurs in the response packet, and send the response packet to the second device.

When no packet loss occurs, the first device generates a response packet.

S903: The first device generates the response packet.

S904: The first device sends the response packet to the second device.

S905: The second device sends a third packet to the first device based on the response packet.

When the response packet carries a sequence number of service data that needs to be retransmitted, the second device determines, based on the sequence number, a service identifier of the service data that needs to be retransmitted. The second device determines, based on the service identifier, a time sequence attribute of the service data that needs to be retransmitted. When the time sequence attribute of the service data that needs to be retransmitted is a blocking attribute, the service data that needs to be retransmitted is encapsulated into an ARTP packet, the ARTP packet is carried in the third packet, and the third packet is sent to the first device.

When the time sequence attribute of the service data that needs to be retransmitted is a non-blocking attribute, if new service data is generated in a service to which the service data that needs to be retransmitted belongs, or new service data in the service to which the service data that needs to be retransmitted belongs has been sent to the first device or has been acknowledged by the first device, only information such as an attribute of the service data that needs to be retransmitted is encapsulated to obtain the third packet, and the third packet is sent to the first device. In other words, a payload of the ARTP packet corresponding to the service data that needs to be retransmitted is empty.

The third packet may further carry service data in another service. For a specific generation manner of the third packet, refer to detailed descriptions of a generation manner of the first packet. Details are not described herein again.

It should be noted that the third packet in this embodiment of this application may be considered as a possible implementation of the first packet. In other words, a format of the third packet is the same as that of the first packet. In other words, in a possible implementation, the first packet may carry the ARTP packet including the service data that needs to be retransmitted.

For example, the second device records packet loss information of service data in each service. As shown in FIG. 10, a loss domain includes a loss domain 1 and a loss domain 2, and a packet loss occurs on all service data corresponding to a sequence number in the loss domain. An acknowledgment domain includes an acknowledgment domain 1 and an acknowledgment domain 2. All service data corresponding to a sequence number in the acknowledgment domain has been received and acknowledged by the first device. Service data corresponding to a sequence number in an unknown domain has been sent to the first device, but no response packet fed back by the first device is received. Service identifiers in the loss domain 1 include a service 1 (CAN ID 1), a service 2 (CAN ID 2), and a service 3 (CAN ID 3), that is, the service 1, the service 2, and the service 3. A service identifier in the acknowledgment domain 1 includes the service 1 (CAN ID 1). Service identifiers in the loss domain 2 include the service 2 (CAN ID 2) and the service 3 (CAN ID 3). A service identifier included in the unknown domain is the service 3 (CAN ID 3).

When attributes of the service 1, the service 2, and the service 3 are all non-blocking attributes, because latest service data of the service 1 has been acknowledged, in other words, the service 1 is included in the acknowledgment domain 1, even if a packet loss occurs on service data of the service 1 in the loss domain 1, the service data does not need to be retransmitted, and only information such as an attribute and a sequence number of the service data on which the packet loss occurs needs to be carried in an ARTP header. Latest service data of the service 3 has been sent to the first device. Therefore, service data of the service 3 in the loss domain 1 and the loss domain 2 does not need to be retransmitted, and only information such as an attribute and a sequence number of service data on which a packet loss occurs needs to be carried in a packet header of an ARTP packet 1. The loss domain 1 and the loss domain 2 both include the service 2. However, because an attribute of the service 2 is a non-blocking attribute, service data of the service 2 in the loss domain 1 does not need to be retransmitted, and only information such as an attribute and a sequence number of service data on which a packet loss occurs needs to be carried in a packet header of an ARTP packet. Service data of the service 2 in the loss domain 2 needs to be retransmitted. The service data of the service 2 in the loss domain 2 is encapsulated to obtain an ARTP packet 2. The ARTP packet 1 and the ARTP packet 2 are encapsulated into a third packet, and the third packet is sent to the first device.

In addition, if to-be-sent data includes the service data of the service 2, the service data of the service 2 in the loss domain 1 and the loss domain 2 does not need to be retransmitted.

After receiving the third packet, the second device performs acknowledgment based on a sequence number in a packet header of an ARTP packet. In this way, an ARTP packet whose data field is empty may also be acknowledged. This prevents the first device from repeatedly requesting the second device to retransmit the service data, that is, avoids invalid retransmissions.

For example, as shown in FIG. 11, first, the second device sends service data whose sequence numbers are 0 to 599, and receives at least one response packet fed back by the first device. There may be a plurality of response packets. In this way, the second device determines service data on which a packet loss occurs and service data that has been received by the first device. The first device has received service data whose sequence numbers are less than 200, and the first device has received service data whose sequence numbers are 300 to 399 and 500 to 599. Packets of a service CAN ID 1 are lost. Sequence numbers of the packets are respectively 200 to 249 and 400 to 449. Packets of a service CAN ID 2 are also lost. Sequence numbers of the packets are respectively 250 to 299 and 450 to 499. The packets of the service CAN ID 1 are lost. The sequence numbers of the packets are respectively 200 to 249 and 400 to 449. The packets of the service CAN ID 2 are also lost. The sequence numbers of the packets are respectively 250 to 299 and 450 to 499.

For retransmission of the packets of the service CAN ID 1, data fields in ARTP packets respectively corresponding to the sequence numbers 200 to 249 are empty, that is, only information in a packet header is transmitted. However, complete data of the packets whose sequence numbers are 400 to 449 needs to be transmitted. To be specific, service data whose sequence numbers are 400 to 449 and information such as attributes of the service data need to be encapsulated into ARTP packets.

For retransmission of the packets of the service CAN ID 2, because latest to-be-sent service data includes service data of the service CAN ID 2, data fields in ARTP packets respectively corresponding to the sequence numbers 250 to 299 and 450 to 499 are empty. ARTP packets respectively corresponding to sequence numbers 600 to 649 include latest service data and information such as an attribute of the service data.

The second device encapsulates the ARTP packets respectively corresponding to the sequence numbers 200 to 249, the ARTP packets respectively corresponding to the sequence numbers 400 to 449, the ARTP packets respectively corresponding to the sequence numbers 250 to 299 and 450 to 499, and the ARTP packets respectively corresponding to the sequence numbers 600 to 649, to obtain a third packet, and sends the third packet to the first device.

In this way, when the service data has a non-blocking attribute, time order preserving of service data in a same service is ensured (in other words, new service data overwrites old service data), so that blocking-free submission can be implemented without waiting. In addition, only latest service data is retransmitted, to avoid disorder of received service data.

In addition, when an attribute of an ARTP packet is a non-blocking attribute, the blocking-free submission can be implemented, to avoid a delay in receiving a packet by a receiving end.

The foregoing is a specific process in which the service data that needs to be retransmitted is determined by the first device. The following describes in detail a specific process in which the service data that needs to be retransmitted is determined by the second device.

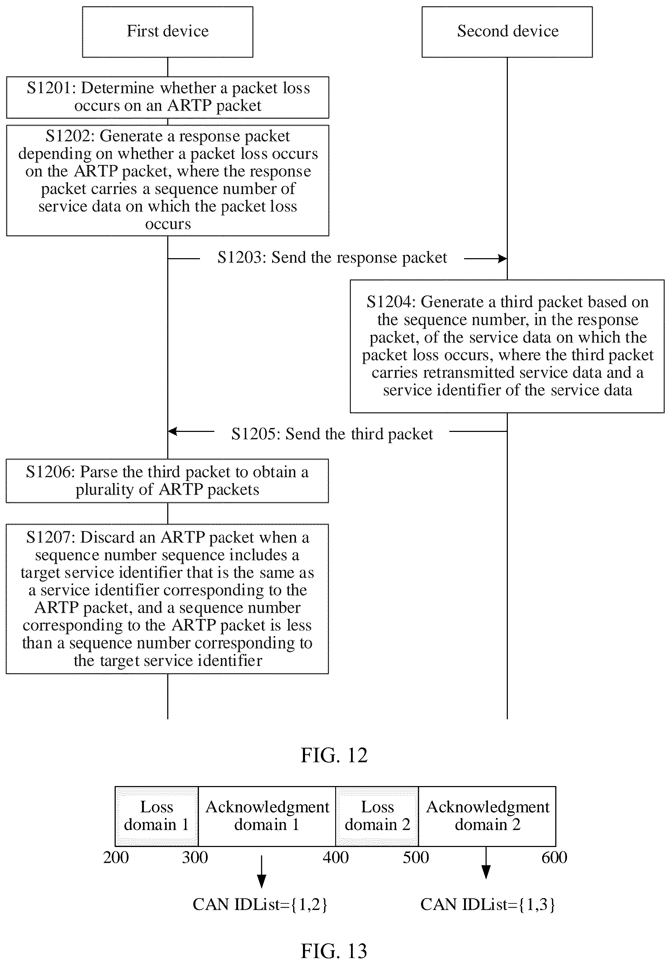

FIG. 12 is a schematic flowchart of a service data retransmission method according to an embodiment of this application. As shown in FIG. 12, the service data retransmission method provided in this embodiment of this application may include steps S1201 to S1207. Herein, before S1201, the method further includes S501 to S505 in the embodiment corresponding to FIG. 5. S1201 and S1202 may be considered as a possible implementation of S506.

It should be noted that, when the data that needs to be retransmitted is determined by using the first device, the second packet in the embodiment corresponding to FIG. 5 further carries the service identifier corresponding to the service data, in other words, the ARTP packet further carries the service identifier corresponding to the service data. In addition, a time sequence attribute corresponding to an ARTP packet in the embodiment corresponding to FIG. 12 is a non-blocking attribute.

S1201: The first device determines whether a packet loss occurs on an ARTP packet.

The first device determines, based on a sequence number of a packet that has been received, whether a packet loss occurs. For example, sequence numbers of packets that have been received by the first device include 0001, 0002, 0004, and 0005. In other words, a packet loss occurs on an ARTP packet whose sequence number is 0003.

Herein, the first device generates a sequence number queue, and divides the sequence number queue into different domains, for example, an acknowledgment domain and a loss domain. The acknowledgment domain records a sequence number of service data that has been received by the first device and a service identifier (referred to as a target service identifier below) of the service data, and the loss domain records a sequence number of lost service data.

For example, as shown in FIG. 13, a loss domain 1 includes a sequence number 200 to a sequence number 299, in other words, service data corresponding to the sequence number 200 to the sequence number 299 is lost. An acknowledgment domain 1 includes a sequence number 300 to a sequence number 399, in other words, the first device has received service data corresponding to the sequence number 300 to the sequence number 399, and service identifiers in the acknowledgment domain 1 are a CAN ID 1 and a CAN ID 2, that is, CAN IDList={1, 2}. A loss domain 2 includes a sequence number 400 to a sequence number 499, in other words, service data corresponding to the sequence number 400 to the sequence number 499 is lost. An acknowledgment domain 2 includes a sequence number 500 to a sequence number 599, in other words, the first device has received service data corresponding to the sequence number 500 to the sequence number 599, and service identifiers in the acknowledgment domain 2 are a CAN ID 1 and a CAN ID 3, that is, CAN IDList={1, 3}.

S1202: The first device generates a response packet depending on whether a packet loss occurs on an ARTP packet, where the response packet carries a sequence number of service data on which a packet loss occurs.

S1203: The first device sends the response packet to the second device.

S1204: The second device generates a third packet based on the sequence number, in the response packet, of the service data on which the packet loss occurs, where the third packet carries retransmitted service data and a service identifier of the service data.

S1205: The second device sends the third packet to the first device.

S1206: The first device parses the third packet to obtain a plurality of ARTP packets.

S1207: The first device discards an ARTP packet when the sequence number sequence includes a target service identifier that is the same as a service identifier corresponding to the ARTP packet, and a sequence number corresponding to the ARTP packet is less than a sequence number corresponding to the target service identifier.

Because the sequence number sequence records only a related service identifier in the acknowledgment domain, when a time sequence attribute of an ARTP packet is a non-blocking attribute, if a service identifier corresponding to a retransmitted ARTP packet is the same as the service identifier in the acknowledgment domain and a sequence number of the ARTP packet is less than a sequence number in the acknowledgment domain, the retransmitted ARTP packet is an invalid packet, and the first device discards the invalid packet.

For example, as shown in FIG. 13, FIG. 13 shows that after receiving ARTP packets whose sequence numbers are 0 to 199, the first device further receives ARTP packets corresponding to sequence numbers 300 to 399 and ARTP packets corresponding to sequence numbers 500 to 599. In the acknowledgment domain 1, the service CAN ID 1 includes the ARTP packets respectively corresponding to the sequence numbers 300 to 399, and the service CAN ID 2 includes ARTP packets respectively corresponding to the sequence numbers 350 to 399. In the acknowledgment domain 2, the service CAN ID 1 includes ARTP packets respectively corresponding to sequence numbers 500 to 549, and the service CAN ID 2 includes ARTP packets respectively corresponding to sequence numbers 550 to 599. The first device returns a response packet. The response packet carries sequence numbers 200 to 299 and sequence numbers 400 to 499. In other words, ARTP packets respectively corresponding to the sequence numbers 200 to 299 and ARTP packets respectively corresponding to the sequence numbers 400 to 499 all need to be retransmitted.

After receiving the response packet, the second device retransmits, to the first device, the ARTP packets respectively corresponding to the sequence numbers 200 to 299 and the ARTP packets respectively corresponding to the sequence numbers 400 to 499. A service identifier carried in the ARTP packets respectively corresponding to the sequence numbers 200 to 249 is CAN ID 1, and a service identifier carried in the ARTP packets respectively corresponding to the sequence numbers 259 to 299 is CAN ID 2. A service identifier carried in the ARTP packets respectively corresponding to the sequence numbers 400 to 449 is CAN ID 1, and a service identifier carried in the ARTP packets respectively corresponding to the sequence numbers 459 to 499 is CAN ID 2.

Because the acknowledgment domain 2 includes the sequence numbers 500 to 549, a service identifier corresponding to the sequence numbers 500 to 549 is CAN ID 1, and the sequence numbers 200 to 249 and the sequence numbers 400 to 449 are all less than 500, the first device discards all the ARTP packets respectively corresponding to the sequence numbers 259 to 299 and the ARTP packets respectively corresponding to the sequence numbers 400 to 449.

Because the acknowledgment domain 2 includes the sequence numbers 350 to 399, a service identifier corresponding to the sequence numbers 350 to 399 is CAN ID 2, and the sequence numbers 259 to 299 are all less than 350, the first device discards the ARTP packets corresponding to the sequence numbers 259 to 299. The sequence numbers 459 to 499 are greater than 300. Therefore, the first device uploads the ARTP packets whose sequence numbers are 459 to 499 to the application layer.

In this way, when the service data has a non-blocking attribute, time order preserving of service data in a same service is ensured (in other words, new service data overwrites old service data), so that blocking-free submission can be implemented without waiting. In addition, only latest service data is retransmitted, to avoid disorder of received service data.

In addition, when an attribute of an ARTP packet is a non-blocking attribute, the blocking-free submission can be implemented, to avoid a delay in receiving a packet by a receiving end.

Based on a same concept as the method embodiments of the present invention, an embodiment of the present invention further provides a data transmission apparatus. The data transmission apparatus includes several modules, and the modules are configured to perform steps in a personal information identification method provided in an embodiment of the present invention. Division of the modules is not limited herein. It may be clearly understood by a person skilled in the art that, in actual application, the steps in the data transmission method provided in this embodiment of the present invention may be allocated to different modules for implementation as required. In other words, an inner structure of the apparatus is divided into different modules to implement all or a part of the functions described above. The modules in embodiments may be integrated into one processing unit, or each unit may exist alone physically, or two or more modules may be integrated into one unit. The integrated unit may be implemented in a form of hardware, or may be implemented in a form of a software functional unit. In addition, specific names of the modules are merely for ease of distinguishing between the modules, but are not intended to limit the protection scope of the present invention. For specific working processes of the modules in the foregoing apparatus, refer to corresponding processes in the foregoing method embodiments. Details are not described herein again.

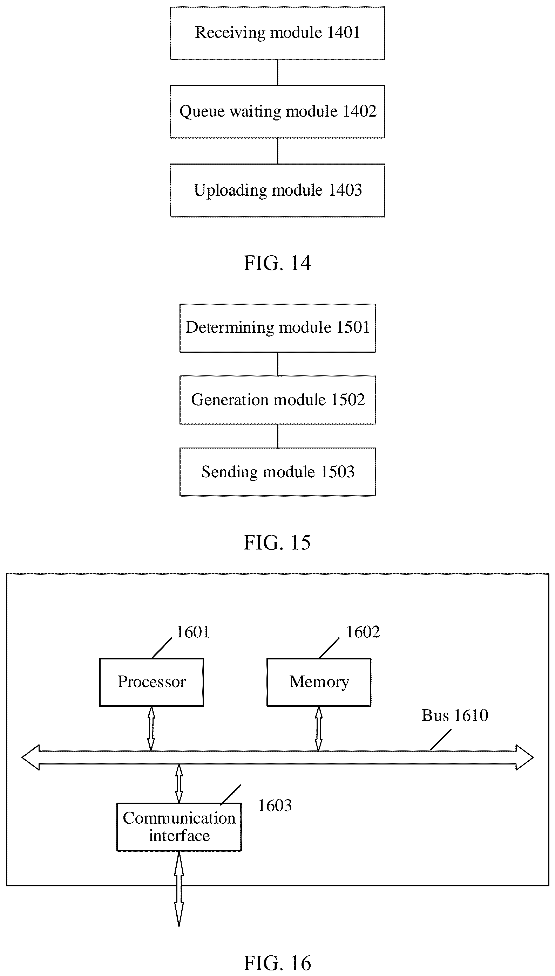

FIG. 14 is a diagram of a structure of a data transmission apparatus according to an embodiment of this application. The data transmission apparatus provided in this embodiment of this application is used in the first device shown in the embodiment in FIG. 5. As shown in FIG. 15, the data transmission apparatus provided in this embodiment of this application includes:
a receiving module 1401, configured to receive a first packet sent by the second device, where the first packet includes a plurality of second packets, each second packet in the plurality of second packets carries service data, a time sequence attribute of the second packet, and a sequence number of the second packet, and the time sequence attribute indicates whether the service data needs to be added to a waiting queue;
a queue waiting module 1402, configured to: when the time sequence attribute of the second packet is a blocking attribute, add the service data carried in the second packet to the waiting queue; and
an uploading module 1403, configured to: when the time sequence attribute of the second packet is a non-blocking attribute, upload the service data to an application layer of the first device.

The second packet is the adaptive reliable transmission protocol (Adaptive Reliable Transmission protocol, ARTP).

According to this embodiment of this application, whether to add a packet to the waiting queue is determined based on different time sequence attributes of the packet. When the time sequence attribute of the packet is a non-blocking attribute, service data may be directly uploaded to the application layer of the first device, without waiting for service data corresponding to a sequence number less than a sequence number of the service data. In this way, a data receiving delay is reduced. In addition, time sequence preserving can be performed on data based on different time sequence attributes of the packet. For example, when the time sequence attribute of the packet is a blocking attribute, the data needs to be added to the waiting queue. When all service data within a sequence number range arrives at the first device, the service data within the sequence number range is uploaded to a service layer. When the time sequence attribute is a non-blocking attribute, old service data is invalid. Even if the old data is lost, the old data does not need to be retransmitted, and new data is directly uploaded to the application layer. This ensures a time sequence of the packet, and reduces the data receiving delay. In addition, one first packet may carry a plurality of ARTP packets, so that data transmission efficiency is improved.

In a possible implementation, the first packet carries a response attribute of each second packet, and the response attribute indicates a speed of responding to the second packet.

The apparatus further includes:
a sending module, configured to send a response packet to the second device based on the response attribute of the second packet.

In this way, the second packet may be responded to based on response speed requirements of different packets, so that a quantity of packet sending times can be reduced, and occupation of communication resources can be reduced.

In a possible implementation, the sending module is configured to:
when the response attribute of the second packet is a quick response attribute, send the response packet of the second packet to the second device within a first preset time length; or
when the response attribute of the second packet is a slow response attribute, send the response packet of the second packet to the second device within a second preset time length, where
the first preset time length is less than the second preset time length.

In this way, the second packet may be responded to based on response speed requirements of different packets, so that a quantity of packet sending times can be reduced, and occupation of communication resources can be reduced.

In a possible implementation, the apparatus further includes:
a generation module, configured to: when the first device generates to-be-sent target service data within the second preset time length, generate a response packet including the to-be-sent target service data, where a destination address of the target service data is an address pointing to the second device.

In this way, service data that needs to be sent by the first device to the second device can be carried in the response packet and sent to the second device, so that the quantity of packet sending times can be reduced, and the occupation of the communication resources can be reduced.

In a possible implementation, the response packet includes a sequence number of service data on which a packet loss occurs, for the second device to determine service data that needs to be retransmitted.

In this way, the second device can determine a packet that needs to be retransmitted.

In a possible implementation, the plurality of second packets include at least one retransmitted second packet.

In this way, the retransmitted second packet can be sent together with another second packet, so that the quantity of packet sending times is reduced, and packet sending efficiency can be improved.

In a possible implementation, the at least one retransmitted second packet includes a second packet whose service data is empty, and a time sequence attribute of the second packet whose service data is empty is a non-blocking attribute.

For example, if the second device determines that a new second packet of a service corresponding to the retransmitted second packet has been sent to the first device or is acknowledged by the first device, when a time sequence attribute corresponding to the service is a non-blocking attribute, the retransmitted second packet is equivalent to an old second packet and has become an invalid packet. In this case, only information such as the sequence number and the time sequence attribute needs to be carried, and the service data does not need to be carried for retransmission.

In this way, invalid retransmission of the packet can be avoided, and the information such as the sequence number is carried in a packet header and sent to the first device, so that disorder of an acknowledgment packet in the first device can be avoided.

In a possible implementation, the first device further stores response information, to indicate a response status of the second packet, and the response information includes a service identifier of a second packet that has been received by the first device; a packet header of the second packet further carries a service identifier, where the service identifier indicates a service corresponding to the service data carried in the second packet; and the apparatus further includes:
a discarding module, configured to: when a time sequence attribute of the retransmitted second packet is a non-blocking attribute, the response information includes a target service identifier that is the same as the service identifier of the second packet, and a sequence number corresponding to the target service identifier is greater than the sequence number of the second packet, discard the second packet.

In this way, the invalid retransmission of the packet can be avoided. In addition, for packets of a same service, when the first device has received a new packet, an old packet is an invalid packet. Discarding the invalid packet can save storage space and avoid disorder of the received packet.

In a possible implementation, the packet header of the second packet further carries a sequence field, and the sequence field indicates a ranking of a second packet with a blocking attribute in the waiting queue.

In a possible implementation, the packet header of the second packet further includes a bit length of the service data, and the apparatus further includes: a determining module, configured to determine the service data in the second packet based on the sequence number and the bit length of the service data.

In a possible implementation, the plurality of second packets are carried in a data field of an internet protocol IP packet.

In a possible implementation, the plurality of second packets are carried in a data field of a UDP packet.

FIG. 15 is a diagram of a structure of another data transmission apparatus according to an embodiment of this application. The data transmission apparatus provided in this embodiment of this application is used in the second device in the embodiment in FIG. 5. As shown in FIG. 15, the data transmission apparatus provided in this embodiment of this application includes:
a determining module 1501, configured to determine service data, where the service data carries a service identifier corresponding to the service data;
a generation module 1502, configured to: generate, based on the service identifier, a second packet including the service data, where the second packet carries a time sequence attribute of the second packet and a sequence number of the second packet, and the time sequence attribute indicates whether the service data needs to be added to a waiting queue; and
generate a first packet based on second packets of a plurality of pieces of service data; and
a sending module 1503, configured to send the first packet to the first device.

According to this embodiment of this application, whether to add a packet to the waiting queue is determined based on different time sequence attributes of the packet. When the time sequence attribute of the packet is a non-blocking attribute, service data may be directly uploaded to an application layer of the first device, without waiting for service data corresponding to a sequence number less than a sequence number of the service data. In this way, a data receiving delay is reduced. In addition, time sequence preserving can be performed on data based on different time sequence attributes of the packet. For example, when the time sequence attribute of the packet is a blocking attribute, the data needs to be added to the waiting queue. When all service data within a sequence number range arrives at the first device, the service data within the sequence number range is uploaded to a service layer. When the time sequence attribute is a non-blocking attribute, old service data is invalid. Even if the old data is lost, the old data does not need to be retransmitted, and new data is directly uploaded to the application layer. This ensures a time sequence of the packet, and reduces the data receiving delay. In addition, one first packet may carry a plurality of ARTP packets, so that data transmission efficiency is improved.

In a possible implementation, the first packet is an IP packet, and the plurality of second packets are carried in a data field of the IP packet.

In a possible implementation, the first packet carries a UDP packet, and the plurality of second packets are carried in a data field of the UDP packet.

In a possible implementation, a packet header of the second packet further includes a bit length of the service data, for determining the service data in the second packet based on the sequence number.

In a possible implementation, the first packet further carries a response attribute of the first packet, the response attribute indicates a speed of responding to the first packet, the response attribute includes a quick response attribute and a slow response attribute, and a response speed corresponding to a packet with a quick response attribute is greater than a response speed corresponding to a packet with a slow response attribute.

In this way, the first device may respond to the second packet based on response speed requirements of different packets, so that a quantity of packet sending times can be reduced, and occupation of communication resources can be reduced.

In a possible implementation, the determining module is further configured to:
determine respective response attributes of the plurality of pieces of service data based on respective service identifiers of the plurality of pieces of service data; and
when a response attribute of at least one of the plurality of pieces of service data is a quick response attribute, determine that the response attribute of the first packet is a quick response attribute; or
when response attributes of all of the plurality of pieces of service data are slow response attributes, determine that the response attribute of the first packet is a slow response attribute.

In a possible implementation, the plurality of second packets include at least one retransmitted second packet, and when an attribute of the retransmitted second packet is a non-blocking attribute and the second device has generated a target packet, service data carried in the retransmitted second packet is empty, where the target packet is a second packet that belongs to a same service as the retransmitted second packet, and a sequence number of the target packet is greater than a sequence number of the retransmitted second packet.

In this way, invalid retransmission of the packet can be avoided, and the information such as the sequence number is carried in a packet header and sent to the first device, so that disorder of an acknowledgment packet in the first device can be avoided.

In a possible implementation, the apparatus further includes:
a receiving module, configured to receive a response packet sent by the first device; and
a parsing module, configured to parse the response packet to obtain a sequence number of a second packet on which a packet loss occurs.

The generation module is further configured to generate the retransmitted second packet based on the sequence number of the second packet on which the packet loss occurs.

Based on a same concept as the method embodiments of the present invention, an embodiment of the present invention further provides a computing device. The computing device may be a first device or a second device. The computing device may be a server or a terminal device. The terminal device may be a mobile phone, a tablet computer, a wearable device, a smart television, Huawei Vision, a smart speaker, a head unit, or the like.

FIG. 16 is a diagram of a structure of a computing device according to an embodiment of this application.

As shown in FIG. 16, the computing device includes a processor 1601, a memory 1602, and a communication interface 1603. The processor 1601, the memory 1602, and the communication interface 1603 are connected through a bus 1610. The memory 1602 includes an operating system and a program code module.

The memory 1602 may include a mass storage for data or instructions. By way of example, and not limitation, the memory 1602 may include a hard disk drive (Hard Disk Drive, HDD), a floppy disk drive, a flash memory, an optical disc, a magneto-optical disc, a magnetic tape, a universal serial bus (Universal Serial Bus, USB) drive, or a combination of two or more of these. In an appropriate case, the memory 1602 may include a removable or non-removable (or fixed) medium. In an appropriate case, the memory 1602 may be inside or outside an integrated gateway geographic redundancy device. In a specific embodiment, the memory 1602 is a nonvolatile solid-state memory.

The memory may include a read-only memory (ROM), a random access memory (RAM), a magnetic disk storage medium device, an optical storage medium device, a flash memory device, and an electrical, optical, or other physical/tangible memory storage device. Therefore, generally, the memory includes one or more tangible (non-transient) computer-readable storage media (for example, a storage device) having software including computer-executable instructions encoded thereon, and when the software is executed (for example, by one or more processors), the software may be operated to perform operations described with reference to the methods in this application.

The processor 1601 reads and executes computer program instructions stored in the memory 1602, to implement any method in the foregoing embodiments.

In an example, the computing device may further include the communication interface 1603 and the bus 1610. As shown in FIG. 16, the processor 1601, the memory 1602, and the communication interface 1603 are connected and communicate with each other through the bus 1610.

The communication interface 1603 is mainly configured to implement communication between modules, apparatuses, units, and/or devices in embodiments of this application.

The bus 1610 includes hardware, software, or both, and couples components of the computing device together. By way of example, and not limitation, the bus may include an accelerated graphics port (AGP) or another graphics bus, an enhanced industry standard architecture (EISA) bus, a front side bus (FSB), a hyper transport (HT) interconnect, an industry standard architecture (ISA) bus, an infinite bandwidth interconnect, a low pin count (LPC) bus, a memory bus, a micro channel architecture (MCA) bus, a peripheral component interconnect (PCI) bus, a PCI-Express (PCI-X) bus, a serial advanced technology attachment (SATA) bus, a video electronics standards association local bus (VLB), another appropriate bus, or a combination of two or more of the foregoing buses. In an appropriate case, the bus 1610 may include one or more buses. Although a specific bus is described and shown in this embodiment of this application, any appropriate bus or interconnection is considered in this application.

It can be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor.

The method steps in embodiments of this application may be implemented in a hardware manner, or may be implemented in a manner of executing software instructions by the processor. The software instructions may include corresponding software modules. The software modules may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk drive, a removable hard disk drive, a CD-ROM, or any other form of storage medium well-known in the art. For example, a storage medium is coupled to the processor, so that the processor can read information from the storage medium and write information into the storage medium. Certainly, the storage medium may be a component of the processor. The processor and the storage medium may be located in an ASIC.

All or a part of the foregoing embodiments may be implemented by using software, hardware, firmware, or any combination thereof. When the software is used to implement the foregoing embodiments, all or a part of the foregoing embodiments may be implemented in a form of a computer program product. The computer program product includes one or more computer instructions. When computer program instructions are loaded and executed on a computer, the procedures or functions according to embodiments of this application are all or partially generated. The computer may be a general-purpose computer, a dedicated computer, a computer network, or another programmable apparatus. The computer instruction may be stored in a computer-readable storage medium, or may be transmitted by using the computer-readable storage medium. The computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data computer device, for example, a server, a data center, or the like integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like.

It may be understood that various numbers in embodiments of this application are merely used for differentiation for ease of description, and are not used to limit the scope of embodiments of this application.

## Claims

1. A data transmission method, applied to a first device, wherein the first device communicates with a second device over Ethernet, and the method comprises:
receiving a first packet sent by the second device, wherein the first packet comprises a plurality of second packets, each second packet in the plurality of second packets carries service data, a time sequence attribute of the second packet, and a sequence number of the second packet, and the time sequence attribute indicates whether the service data needs to be added to a waiting queue; and
when the time sequence attribute of the second packet is a blocking attribute, adding the service data carried in the second packet to the waiting queue; or
when the time sequence attribute of the second packet is a non-blocking attribute, uploading the service data to an application layer of the first device.

2. The method according to claim 1, wherein the first packet carries a response attribute of each second packet, and the response attribute indicates a speed of responding to the second packet; and
the method further comprises:
sending a response packet to the second device based on the response attribute of the second packet.

3. The method according to claim 2, wherein the sending a response packet of the second packet to the second device based on the response attribute of the second packet comprises:
when the response attribute of the second packet is a quick response attribute, sending the response packet of the second packet to the second device within a first preset time length; or
when the response attribute of the second packet is a slow response attribute, sending the response packet of the second packet to the second device within a second preset time length, wherein
the first preset time length is less than the second preset time length.

4. The method according to claim 3, wherein the method further comprises:
when the first device generates to-be-sent target service data within the second preset time length, generating a response packet comprising the to-be-sent target service data, wherein a destination address of the target service data is an address pointing to the second device.

5. The method according to claim 2, wherein the response packet comprises a sequence number of service data on which a packet loss occurs, for the second device to determine service data that needs to be retransmitted.

6. The method according to claim 1, wherein the plurality of second packets comprise at least one retransmitted second packet.

7. The method according to claim 6, wherein the at least one retransmitted second packet comprises a second packet whose service data is empty, and a time sequence attribute of the second packet whose service data is empty is a non-blocking attribute.

8. The method according to claim 6, wherein the first device further stores response information, to indicate a response status of the second packet, and the response information comprises a service identifier of a second packet that has been received by the first device; a packet header of the second packet further carries a service identifier, wherein the service identifier indicates a service corresponding to the service data carried in the second packet; and the method further comprises:
when a time sequence attribute of the retransmitted second packet is a non-blocking attribute, the response information comprises a target service identifier that is the same as the service identifier of the second packet, and a sequence number corresponding to the target service identifier is greater than the sequence number of the second packet, discarding the second packet.

9. The method according to any one of claims 1 to 8, wherein the packet header of the second packet further carries a sequence field, and the sequence field indicates a ranking of a second packet with a blocking attribute in the waiting queue.

10. The method according to any one of claims 1 to 8, wherein the packet header of the second packet further comprises a bit length of the service data, and the method further comprises:
determining the service data in the second packet based on the sequence number and the bit length of the service data.

11. The method according to any one of claims 1 to 8, wherein the first packet is an internet protocol IP packet, and the plurality of second packets are carried in a data field of the IP packet.

12. The method according to any one of claims 1 to 8, wherein the first packet carries a user datagram protocol UDP packet, and the plurality of second packets are carried in a data field of the UDP packet.

13. A data transmission method, applied to a second device, wherein the second device communicates with a first device over Ethernet, and the method comprises:
determining service data, wherein the service data carries a service identifier corresponding to the service data;
generating, based on the service identifier, a second packet comprising the service data, wherein the second packet carries a time sequence attribute of the second packet and a sequence number of the second packet, and the time sequence attribute indicates whether the service data needs to be added to a waiting queue;
generating a first packet based on second packets of a plurality of pieces of service data; and
sending the first packet to the first device.

14. The method according to claim 13, wherein the first packet is an IP packet, and the plurality of second packets are carried in a data field of the IP packet.

15. The method according to claim 13, wherein the first packet carries a UDP packet, and the plurality of second packets are carried in a data field of the UDP packet.

16. The method according to any one of claims 13 to 15, wherein a packet header of the second packet further comprises a bit length of the service data, for determining the service data in the second packet based on the sequence number.

17. The method according to any one of claims 13 to 15, wherein the first packet further carries a response attribute of the first packet, the response attribute indicates a speed of responding to the first packet, the response attribute comprises a quick response attribute and a slow response attribute, and a response speed corresponding to a packet with a quick response attribute is greater than a response speed corresponding to a packet with a slow response attribute.

18. The method according to claim 17, wherein the method further comprises:
determining respective response attributes of the plurality of pieces of service data based on respective service identifiers of the plurality of pieces of service data; and
when a response attribute of at least one of the plurality of pieces of service data is a quick response attribute, determining that the response attribute of the first packet is a quick response attribute; or
when response attributes of all of the plurality of pieces of service data are slow response attributes, determining that the response attribute of the first packet is a slow response attribute.

19. The method according to claim 13, wherein the plurality of second packets comprise at least one retransmitted second packet, and when an attribute of the retransmitted second packet is a non-blocking attribute and the second device has generated a target packet, service data carried in the retransmitted second packet is empty, wherein the target packet is a second packet that belongs to a same service as the retransmitted second packet, and a sequence number of the target packet is greater than a sequence number of the retransmitted second packet.

20. The method according to claim 19, wherein the method further comprises:
receiving a response packet sent by the first device;
parsing the response packet to obtain a sequence number of a second packet on which a packet loss occurs; and
generating the retransmitted second packet based on the sequence number of the second packet on which the packet loss occurs.

21. A data transmission apparatus, used in a first device, wherein the first device communicates with a second device over Ethernet, and the apparatus comprises:
a receiving module, configured to receive a first packet sent by the second device, wherein the first packet comprises a plurality of second packets, each second packet in the plurality of second packets carries service data, a time sequence attribute of the second packet, and a sequence number of the second packet, and the time sequence attribute indicates whether the service data needs to be added to a waiting queue;
a queue waiting module, configured to: when the time sequence attribute of the second packet is a blocking attribute, add the service data carried in the second packet to the waiting queue; and
an uploading module, configured to: when the time sequence attribute of the second packet is a non-blocking attribute, upload the service data to an application layer of the first device.

22. A data transmission apparatus, used in a second device, wherein the second device communicates with a first device over Ethernet, and the apparatus comprises:
a determining module, configured to determine service data, wherein the service data carries a service identifier corresponding to the service data;
a first generation module, configured to generate, based on the service identifier, a second packet comprising the service data, wherein the second packet carries a time sequence attribute of the second packet and a sequence number of the second packet, and the time sequence attribute indicates whether the service data needs to be added to a waiting queue;
a second generation module, configured to generate a first packet based on second packets of a plurality of pieces of service data; and
a sending module, configured to send the first packet to the first device.

23. A computing device, comprising:
at least one memory, configured to store a program; and
at least one processor, configured to execute the program stored in the memory, wherein when the program stored in the memory is executed, the processor is configured to perform the method according to any one of claims 1 to 12 or the method according to any one of claims 13 to 20.

24. A computer storage medium, wherein the computer storage medium stores instructions, and when the instructions are run on a computer, the computer is enabled to perform the method according to any one of claims 1 to 12 or the method according to any one of claims 13 to 20.

25. A computer program product comprising instructions, wherein when the instructions are run on a computer, the computer is enabled to perform the method according to any one of claims 1 to 12 or the method according to any one of claims 13 to 20.
